(19) Europäisches Patentamt
European Patent Office
Office européen des brevets

(11) Veröffentlichungsnummer: **0 226 839**
**B1**

(12) # EUROPÄISCHE PATENTSCHRIFT

(45) Veröffentlichungstag der Patentschrift: **14.03.90**

(51) Int. Cl.⁴: **C08G 63/60**

(21) Anmeldenummer: **86116263.4**

(22) Anmeldetag: **24.11.86**

(54) **Vollaromatische Polyester, deren Herstellung und Verwendung.**

(30) Priorität: **04.12.85 DE 3542815**

(43) Veröffentlichungstag der Anmeldung:
**01.07.87 Patentblatt 87/27**

(45) Bekanntmachung des Hinweises auf die Patenterteilung:
**14.03.90 Patentblatt 90/11**

(84) Benannte Vertragsstaaten:
**BE CH DE FR GB IT LI LU NL SE**

(56) Entgegenhaltungen:
**EP-A- 0 139 303**
**US-A- 4 118 372**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen(DE)**

(72) Erfinder: **Kock, Hans-Jakob, Dr., Benckiserstrasse 63, D-6700 Ludwigshafen(DE)**
Erfinder: **Portugall, Michael, Dr., Raiffeisenstrasse 7, D-6706 Wachenheim(DE)**
Erfinder: **Hambrecht, Juergen, Dr., Am Klosterwald 31, D-4400 Münster-Hiltrup(DE)**

EP 0 226 839 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der Erfindung sind vollaromatische Polyester, die unterhalb 300°C eine flüssig-kristalline fadenbildende Schmelze bilden.

Es wurden schon eine Reihe von vollaromatischen flüssig-kristallinen Polyestern beschrieben. Aus der DE-OS 3 320 188 sind flüssig-kristalline Polyester aufgebaut aus Einheiten, die sich von 4-Hydroxybenzoesäure, Terephthalsäure und 4,4'-Dihydroxydiphenyl ableiten, bekannt. Solche Polyester haben jedoch erst bei Temperaturen über 300°C ein ausreichendes Fließverhalten. Ihre Verarbeitung zu Formteilen wird daher beeinträchtigt. Auch die aus der DE-OS 3 325 703 bekannten flüssig-kristallinen Polyester, die aus Einheiten, die sich von 4-Hydroxybenzoesäure, Terephthalsäure, Hydrochinon und 4,4'-Dihydroxydiphenyl ableiten, können erst bei Temperaturen oberhalb 300°C verarbeitet werden. Darüber hinaus haben die daraus hergestellten Formkörper keine ausreichende Wärmebeständigkeit. Aus der US-PS 4 093 595 sind auch bereits Polyester bekannt, die aus 2,6-Dimethylhydrochinon, 3,3',5,5'-Tetramethyl-4,4'-dihydroxybiphenyl sowie Terephthalsäure aufgebaut sind, bekannt. Solche Polyester erfüllen jedoch noch nicht alle in der Technik gestellten Forderungen und sind verbesserungsbedürftig.

Aus der US-A 4 118 372 sind anisotrope Polyester aus einer Vielzahl von Diphenolen, Dicarbonsären und ggf. Hydroxycarbonsären bekannt, wobei u.a. auch die Komponenten a–e genannt sind. Allerdings wird einPolyester aus a, b, c, d und e nicht differenziert offenbart.

Es war deshalb die technische Aufgabe gestellt, vollaromatische flüssig-kristalline Polyester zur Verfügung zu stellen, die unterhalb 300°C eine flüssig-kristalline fadenziehende Schmelze bilden, eine möglichst hohe Glasübergangstemperatur haben und sich durch eine möglichst geringe Eigenfarbe sowie durch hohe Abriebfestigkeit und Chemikalienbeständigkeit auszeichnen.

Diese technische Aufgabe wird gelöst durch vollaromatische Polyester, die unterhalb 300°C eine flüssig-kristalline fadenziehende Schmelze bilden, aufgebaut aus

a) 10 bis 25 Mol.% wiederkehrenden Einheiten der Formel I

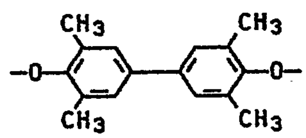

I

b) 5 bis 15 Mol.% wiederkehrenden Einheiten der Formel II

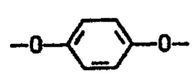

II

c) 5 bis 15 Mol.% wiederkehrenden Einheiten der Formel III

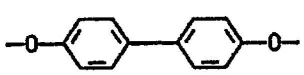

III

d) mindestens 10 Mol.% wiederkehrenden Einheiten der Formel IV

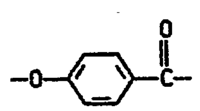

IV

e) einer der Summe aus a), b) und c) entsprechenden molaren Menge an wiederkehrenden Einheiten der Formel V

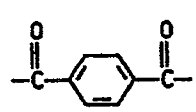

V

wobei sich die Summe der molaren Anteile der Komponenten a, b, c, d und e jeweils auf 100 Mol.% ergänzen.

Die erfindungsgemäßen vollaromatisch flüssig-kristallinen Polyester haben den Vorteil, daß sie keiner hohen Verarbeitungstemperaturen bedürfen und darüber hinaus auch bei erhöhter Temperatur gute Dauergebrauchseigenschaften aufweisen. Ferner zeichnen sie sich durch eine geringe Verfärbung sowie durch hohe Abriebfestigkeit und Chemikalienbeständigkeit aus.

Der flüssig-kristalline Zustand der Polyester kann mit dem Polarisationsmikroskop nach einer in der DE-AS 2 520 819 beschriebenen Methode nachgewiesen werden. Zwischen gekreuzten Polarisatoren weisen die Polymerschmelzen, die in einer Schichtdicke von 10 µm zwischen Glasplatten aufgetragen sind, Texturen auf, die einer mesomorphen (nematischen) Phase zugeordnet werden können.

Als Ausgangsstoff der Formel I wird vorteilhaft 3,3′,5,5′-Tetramethyl-4,4′-dihydroxydiphenyl verwendet.

Als bevorzugte Ausgangsverbindung der Formel II wird Hydrochinon verwendet.

Als Ausgangsverbindung der Formel III wird z.B. 4,4′-Dihydroxydiphenyl verwendet.

Als bevorzugte Ausgangsverbindung der Formel IV wird 4-Hydroxybenzoesäure verwendet.

Als geeignete Ausgangsverbindung der Formel V wird z.B. Terephthalsäure verwendet.

In bevorzugten vollaromatischen Polyestern ist ein Teil der Einheiten b) und/oder c) ersetzt durch

f) wiederkehrende Einheiten der Formel VI

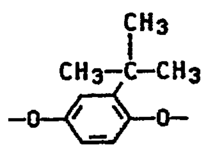

VI

Ein geeigneter Ausgangsstoff hierfür ist z.B. tert.-Butylhydrochinon und/oder

g) wiederkehrenden Einheiten der Formel VII

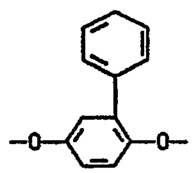

VII

Als bevorzugte Ausgangsverbindung wird Phenylhydrochinon verwendet.

Vorteilhaft enthalten solche vollaromatischen Polyester die wiederkehrenden Einheiten f) und/oder g) in einer Menge von 2 bis 20 Mol.%. Ferner hat es sich als vorteilhaft erwiesen, wenn die Summe der molaren Anteile der Einheiten a) und f) und/oder g) von 20 bis 40 Mol.% beträgt.

In anderen bevorzugten vollaromatischen Polyestern ist ein Teil der Einheiten b) und/oder c) ersetzt durch

h) wiederkehrende Einheiten der Formel VIII

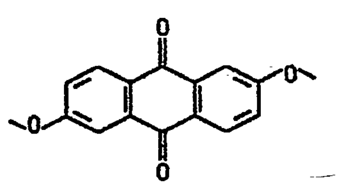

VIII

i) wiederkehrenden Einheiten der Formel IX

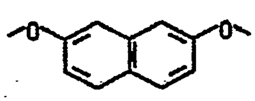

IX

j) wiederkehrenden Einheiten Formel X

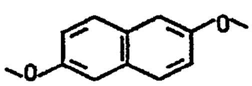

X

und/oder

k) wiederkehrenden Einheiten der Formel XI

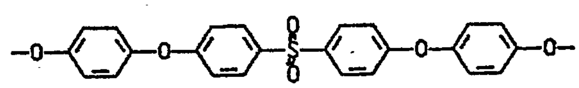

XI

Als Ausgangsstoff für die Komponente h) wird 2,6-Dihydroxyanthrachinon, für die Komponente i) 2,7-Dihydroxynaphthalin, für die Komponente j) 2,6-Dihydroxynaphthalin und für die Komponente k) 4,4′-Di-(p-hydroxyphenoxy)diphenylsulfon verwendet.

Die Summe der molaren Anteile an den Einheiten a), h), i), j) und k) beträgt 20 bis 40 Mol.%.

Es versteht sich, daß auf die Summe die Dihydroxyverbindungen jeweils die äquivalente Menge Terephthalsäure verwendet wird und sich die Summe der molaren Anteile a), b), c), d) und e) jeweils auf 100 Mol.% ergänzen.

Bevorzugte vollaromatische Polyester nach der Erfindung haben eine Glastemperatur von ≧ 134°C, insbesondere ≧ 140°C. Die Glastemperatur soll dabei gemessen werden mit der DSC-Methode, wie sie beschrieben ist von K.H. Illers und anderen in Makromolekulare Chemie **127** (1969), Seiten 1 ff. Die vollaromatischen flüssig-kristallinen Polyester nach der Erfindung bilden bei einer Temperatur < 300°C insbesondere < 280°C eine flüssig-kristalline fadenbildende Schmelze. Bevorzugt sind auch flüssigkristalline aromatische Polyester, die bei einer Temperatur > 220°C und < 280°C Teilkristallinität aufweisen.

Die erfindungsgemäßen flüssig-kristallinen Polyester lassen sich erhalten durch eine Reihe von Techniken, wie sie beispielsweise in den US-A 4 375 530 und 4 118 372 beschrieben werden.

Nach einer vorteilhaften Arbeitsweise erhält man die erfindungsgemäßen Polyester in einem Einstufenverfahren bei dem man die nicht derivatisierten Ausgangsstoffe unter Verwendung von Anhydriden niederer Fettsäuren, insbesondere Essigsäureanhydrid und gegebenenfalls unter Mitverwendung von Katalysatoren umsetzt. Hierbei werden die Ausgangsstoffe zusammen mit Essigsäureanhydrid, vorteilhaft in einem mindestens 5 %igen molaren Überschuß, bezogen auf die vorhandenen Hydroxygruppen, unter Inertgasatmosphäre und Rühren auf eine Temperatur erhitzt, bei der Rückfluß zu beobachten ist. Vorteilhaft wird die Temperatur stufenweise gesteigert, z.B. höchstens 5 Stunden, vorzugsweise bis zu 2 Stunden auf 150 bis 200°C, anschließend wird die Temperatur z.B. innerhalb von 2-2 1/2 Stunden auf 300 bis 350°C gesteigert. Hierbei werden überschüssige Fettsäureanhydride und Fettsäuren abdestilliert. Um die Reaktion zu vervollständigen hat es sich als vorteilhaft erwiesen, gegen Ende verminderten Druck, z.B. 5 bis 20 mbar anzuwenden.

Bemerkenswert und nicht vorherzusehen bei der Anwendung dieses Einstufenverfahrens ist zunächst die problemlose und vollständige Reaktion ohne Katalysatorzusatz zu den gewünschten Polymeren in einer relativ kurzen Zeit. Dies ist umso bemerkenswerter als durch die Vielzahl chemisch unterschiedlicher Hydroxygruppen eine Abstufung der Reaktivitäten und damit ein mangelhafter polymerer Aufbau zu erwarten wäre.

Die so erhaltenen vollaromatischen flüssig-kristallinen Polyester können in festem Zustand z.B. bei Temperaturen von 150 bis 250°C bis zur gewünschten Viskosität weiter kondensiert werden. Diese Nachkondensation in fester Phase kann sowohl vor als auch nach einer thermoplastischen Verarbeitung erfolgen.

Die erfindungsgemäßen vollaromatischen flüssig-kristallinen Polyester eignen sich zur Herstellung von Fäden, Folien, Schäumen und technischen Formteilen durch Spritzguß, Pressen oder Extrusion.

Die Erfindung sei an folgenden Beispielen veranschaulicht.

Beispiel 1

0,2 mol Terephthalsäure, 0,26 mol 4-Hydroxybenzoesäure, 0,07 mol Hydrochinon, 0,04 mol 4,4′-Dihydroxybiphenyl, 0,09 mol 3,3′,5,5′-Tetramethyl-4,4′-dihydroxybiphenyl sowie 0,86 mol Essigsäureanhydrid werden in einem Kolben mit Rührer, Stickstoffeinleitung und einem Destillationsaufsatz eingewogen: Unter $N_2$-Atmosphäre wird in einem Metallbad auf 100°C erhitzt. Die Temperatur wird dann in 30′ auf 150°C, in weiteren 100′ auf 200°C und anschließend in 120′ auf die Endtemperatur von 325°C erhöht.

Anschließend wird der Druck auf 560 mbar und dann alle 10′ auf die Hälfte verringert. Am Ende beträgt der Druck 10 mbar. Man erhält so eine hochviskose, fadenbildende mesomorphe Schmelze. Aus DSC-Messungen ergibt sich eine Glastemperatur von 144°C und eine Schmelztemperatur von 285°C. Die inhärente Viskosität beträgt 0,9 dl/g, gemessen in 0,1 gew.%iger Lösung in Pentafluorphenol bei 60°C.

**Patentansprüche**

1. Vollaromatische Polyester, die unterhalb von 300°C eine flüssig-kristalline fadenbildende Schmelze bilden, aufgebaut aus

a) 10 bis 25 Mol.-% wiederkehrenden Einheiten der Formel I

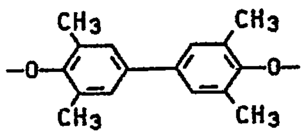

I

b) 5 bis 15 Mol.-% wiederkehrenden Einheiten der Formel II

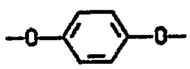

II

c) 5 bis 15 Mol.-% wiederkehrenden Einheiten der Formel III

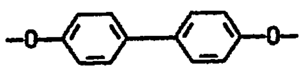

III

d) mindestens 10 Mol.-% wiederkehrenden Einheiten der Formel IV

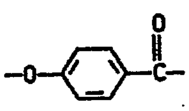

IV

e) einer der Summe aus a), b) und c) entsprechenden molaren Menge von wiederkehrenden Einheiten der Formel V

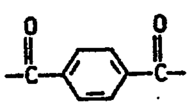

V

wobei die Summe der molaren Anteile der Komponenten a, b, c, d und e sich jeweils auf 100 Mol.-% ergänzen.

2. Vollaromatische Polyester nach Anspruch 1, in denen zusätzlich ein Teil der Einheiten b) und/oder c) ersetzt ist durch

f) wiederkehrende Einheiten der Formel VI

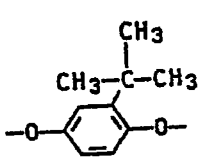

VI

und/oder

g) wiederkehrenden Einheiten der Formel VII

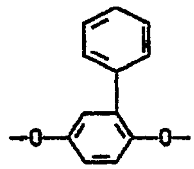

VII

wobei die Menge der Einheiten f) und/oder g) 2 bis 20 Mol-% beträgt.

3. Vollaromatische Polyester nach Anspruch 2, in denen die Summe der molaren Anteile der Einheiten a) und f) und/oder g) 20 bis 40 Mol-% beträgt.

4. Vollaromtaische Polyester nach Anspruch 1, in denen zusätzlich ein Teil der Einheiten b) und/oder c) ersetzt ist durch

h) wiederkehrende Einheiten der Formel VIII

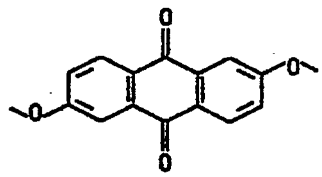

VIII

i) wiederkehrende Einheiten der Formel IX

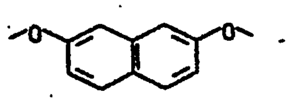

IX

j) wiederkehrende Einheiten der Formel X

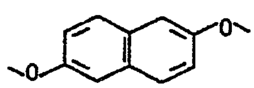

X

und/oder

k) wiederkehrende Einheiten der Formel XI

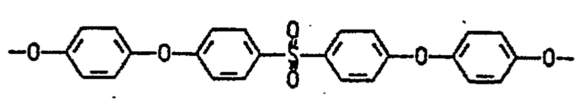

XI

wobei die Summe der molaren Anteile der Einheiten a), h), i), j) und k) 20 bis 40 Mol-% beträgt.

5. Vollaromatische Polyester nach den Ansprüchen 1 bis 4 mit einer Glasübergangstemperatur Tg von ≥134°C.

6. Verfahren zur Herstellung von aromatischen Polyestern nach den Ansprüchen 1 bis 5, dadurch gekennzeichnet, dass man die Monomeren in einer Stufe in Form der underivatisierten Hydroxy- bzw. Carboxyverbindungen und in beschriebenen molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

7. Verfahren nach Anspruch 6, dadurch gekennzeichnet, dass die vollaromatischen Polyester in fester Phase bei einer Teperatur von 150 bis 250°C nachkondensiert werden.

8. Verwendung von vollaromatischen Polyestern nach den Ansprüchen 1 bis 5 zur Herstellung von Fasern, Folien und Formteilen sowie Überzügen.

## Claims

1. A wholly aromatic polyester which forms a liquid-crystalline fiber-forming melt below 300°C and is composed of

a) from 10 to 25 mol % of repeat units of the formula I

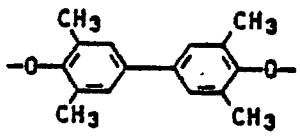

I

b) from 5 to 15 mol % of repeat units of the formula II

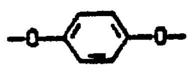

II

c) from 5 to 15 mol % of repeat units of the formula III

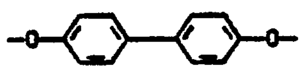

III

d) not less than 10 mol % of repeat units of the formula IV

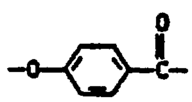

IV

e) a molar amount corresponding to the total amount of a), b), and c) of repat units of the formula V

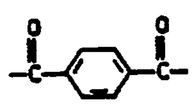

V

the total of the molar proportions of components a, b, c, d and e adding up to 100 mol % in each case.

2. A wholly aromatic polyester as claimed as claimed in claim 1, wherein in addition some of the units b) and/or c) are replaced by

f) repeat units of the formula VI

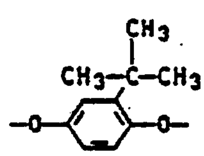

VI

and/or

g) repeat units of the formula VII

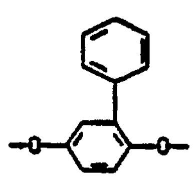

VII

the amount of units f) and/or g) being from 2 to 20 mol %.

3. A wholly aromatic polyester as claimed in claim 2, wherein the total of the molar proportions of units a) and f) and/or g) is from 20 to 40 mol %.

4. A wholly aromatic polyester as claimed in claim 1, wherein in addition some of units b) and/or c) are replaced by

h) repeat units of the formula VIII

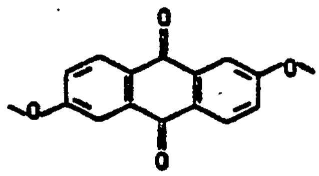

VIII

i) repeat units of the formula IX

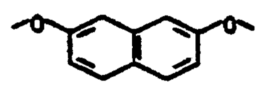

IX

j) repeat units of the formula X

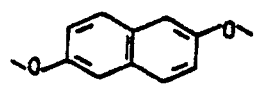

X

and/or

k) repeat units of the formula XI

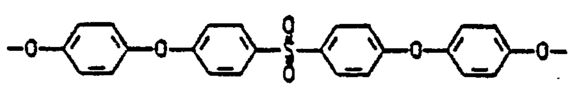

XI

the total of the molar proportions of units a), h), i), j), and k) being from 20 to 40 mol %.

5. A wholly aromatic polyester as claimed in any of claims 1 to 4, which has a glass transition temperature Tg of ≥ 134°C.

6. A process for preparing an aromatic polyester as claimed in any of claims 1 to 5, wherein the monomers are reacted in one stage in the form of the underivatized hydroxy and carboxy compounds and in the molar ratios described in the presence of excess fatty acid anhydride at elevated temperature and fatty acid anhydride and fatty acid are distilled out of the reaction mixture.

7. A process as claimed in claim 6, wherein the wholly aromatic polyester is postcondensed in the solid phase at 150–250°C.

8. Use of a wholly aromatic polyester as claimed in any of claims 1 to 5 for the preparation of fibers, films, moldings and surface coatings.

**Revendications**

1. Polyesters totalement aromatiques qui forment en dessous de 300°C une masse fondue filamenteuse de type cristal liquide, composés de

a) 10 à 25% en moles de motifs répétitifs de formule I

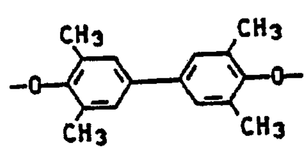

I

b) 5 à 15% en moles de motifs répétitifs de formule II

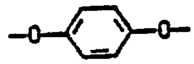

II

c) 5 à 15% en moles de motifs répétitifs de formule III

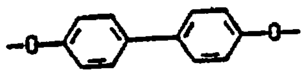

III

d) au moins 10% en moles de motifs répétitifs de formule IV

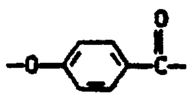

IV

e) une quantité molaire correspondant à la somme de a), b) et c) de motifs répétitifs de formule V

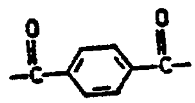

V

la somme des parties molaires des composants a, b, c, d et e se montant à chaque fois à 100% en moles.

2. Polyesters totalement aromatiques selon la revendication 1, dans lesquels en plus une partie des motifs b) et/ou c) est remplacée par

f) des motifs répétitifs de formule VI

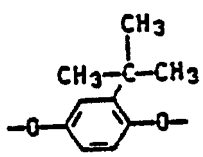

VI

et/ou

g) des motifs répétitifs de formule VII

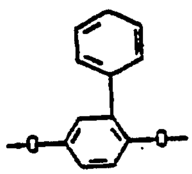

VII

la quantité des motis f) et/ou g) allant jusqu'à 20% en moles.

3. Polyesters totalement aromatiques selon la revendication 2, dans lesquels la somme des parties molaires des motifs a) et f) et/ou g) va de 20 à 40% en moles.

4. Polyesters totalement aromatiques selon la revendication 1, dans lesquels en plus une partie des motifs b) et/ou c) est remplacée par

h) des motifs répétitifs de formule VIII

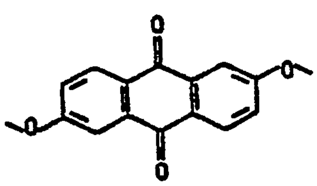

VIII

i) des motifs répétitifs de formule IX

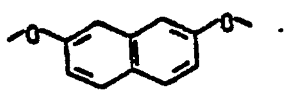

IX

j) des motifs répétitifs de formule X

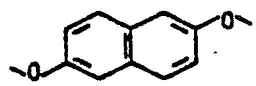

X

et/ou
k) des motifs répétitifs de formule XI

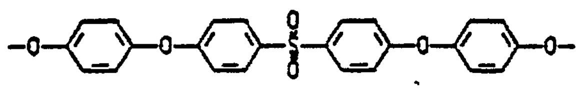

XI

la somme des parties molaires des motifs a), h), i), j), et k) va de 20 à 40% en moles.

5. Polyesters totalement aromatiques selon les revendications 1 à 4, ayant une température de transition vitreuse Tg ≥ 134°C.

6. Procédé de préparation de polyesters totalement aromatiques selon les revendications 1 à 5, caractérisé en ce qu'on fait réagir les monomères, en une étape, sous forme des composés hydroxylés et carboxyliques non modifiés et dans les rapports molaires décrits avec addition d'anhydride d'acide gras en excès, et on élimine du mélange réactionnel par distillation l'anhydride d'acide gras et l'acide gras.

7. Procédé selon la revendication 6, caractérisé en ce qu'on complète la condensation des polyesters totalement aromatiques en phase solide à une température de 150 à 250°C.

8. Utilisation de polyesters totalement aromatiques selon les revendications 1 à 5 pour la préparation de fibres, feuilles, pièces moulées ainsi que de revêtements.